# EUROPEAN PATENT SPECIFICATION

(11) **EP 3 171 670 B1**
(45) Date of publication and mention of the grant of the patent: **30.12.2020**
(21) Application number: 16199334.0
(22) Date of filing: 17.11.2016
(51) Int. Cl.: H05B 47/105, H05B 45/00, H05B 47/19

(54) **LIGHTING SYSTEM**
BELEUCHTUNGSSYSTEM
SYSTÈME D'ÉCLAIRAGE

(30) Priority: 20.11.2015 IT UB20155785
(43) Date of publication of application: 24.05.2017
(73) Proprietor: C-LED S.R.L., 40026 Imola (BO) (IT)
(72) Inventor: PASINI, Alessandro, 47023 Cesena (FC) (IT); BONZI, Giancarlo, 40026 Imola (BO) (IT); VIRNICCHI, Tommaso, 62019 Recanati (MC) (IT)
(74) Representative: Karaghiosoff, Giorgio Alessandro

(56) References cited:
- EP-A1- 2 325 670
- US-A1- 2014 239 852
- US-A1- 2014 285 113
- US-A1- 2015 076 993
- US-A1- 2015 223 309

## Description

The present invention relates to the technical field of lighting, and in particular to the intelligent management of indoor lighting. More particularly, the invention relates to an apparatus and a method to manage indoor lighting and, optionally, also air-conditioning, video surveillance, alarms in a personalized way through the interaction with a portable device.

Lighting systems are known using motion and/or occupancy sensors starting in the presence of a person inside a pre-set area, and switching off after a given pre-set time, in case of absence of persons in the pre-set area.

As an example, Entity Elettronica's ITPD20090154 discloses an indoor lighting system, wherein motion or occupancy sensors start the lighting, and the single lighting devices can adjust lighting conditions according to the presence or absence of at least a person, or according to the fact that the person is approaching or leaving. Moreover, the same document discloses that the lighting elements can exchange information to progressively start the lighting and the successive switching off of the elements themselves, so as not to dazzle the human subjects who are present in sectors neighbouring to the sector the person is moving.

Philips's Patent EP2084945B1 too discloses a system of lighting tiles that start and switch off in the presence of at least a person; moreover, they are provided with a communication device which can interact with a corresponding device (e.g. RFID or NFC) carried by the person her/himself. Said device interacts with a sensor network. The sensors can detect the wireless signal intensity deriving from the portable device, allowing to determine the person's distance and direction of motion, switching on the tiles lying in the person's direction of motion.

Carmanah Technologies's EP2168407B1 is quite similar to EP2084945B1; in this case, too, occupancy/motion sensors are involved, but here the persons carry no device. The lighting elements are provided with a communication system constituting a network, and are pre-programmed so as to determine the activation of a group of lighting elements once the person has entered the area making part of the group. The parameters for activating the following devices on the path are determined as a function of the speed of motion.

A feature in common among the three above-mentioned documents is that in all of them occupancy/motion sensors must be used. Such sensors actively detect the presence of persons, and are used in combination with processing units, which according to the data detected by the sensors themselves generate command or control signals, thanks to control logics embedded in the processing units placed in the single lighting elements.

If this is unavoidable outdoors, wherein the persons interacting with the lighting systems can be any people, therefore not provided with identifying systems, indoors (residential buildings, working environment) the access of persons is supposed to be controlled, and a list of persons authorised to access is supposed to exist, and therefore all the persons can be provided with a portable device.

A further patent application, Casambi's WO2015049412A1, discloses a lighting system wherein the lighting elements form a network according to a known wireless communication standard; both a wall switch and a specific program resident on a PC or on a portable device known as smartphone can control the lighting elements. In this system, occupancy/motion sensors are missing, but the communication devices embedded in the lighting elements automatically interact with each other and with the portable device, with no centralized control. The absence of a centralized control system entails the need to have an important portion of electronic circuits positioned on each lighting element, with an increase in the cost and complexity of the system. Moreover, according to this document, in order to use the system the user must perform a voluntary action, like using a switch or a graphical interface on a portable device.

In the case of indoor environments with controlled access, comparing the complexity of
- a system wherein each single lighting device is provided with occupancy and/or motion devices and with control and adjusting components for adjusting luminous intensity, and
- a system wherein all the control logic is entrusted to a unique centralized device, it is quite obvious that the second solution entails several advantages as soon as the number of lighting device is over a given threshold.

A first drawback of the known art is that providing each single lighting device with sensors entails the sensor cost multiplied by the number of the lighting elements inside the system, and according to the configuration, the cost of the electronics for processing and actuating the control logic software in combination with said sensors.

A second drawback is connected to the problem of system reliability, in that reliability worsens exponentially and not linearly with the increase in the number of components of the system and their complexity.

A third drawback is due to system complexity: when a network of sensors has to be configured, the program has to take account of their distribution in space. This can be very complex when programming must be performed on the single lighting element, more so in case of successive modifications and even more so when the lighting elements are placed in difficult to access positions.

US2014/285113 discloses an illumination control system which provides wireless data transmission with a lamp through a mobile communication device. The lamp has a built-in wireless communication module and a microcontroller. The microcontroller stores a location of the lamp with latitude-longitude values and height values. Accordingly, a user may use the mobile communication device to read the latitude-longitude values and height values of the lamps to achieve an indoor positioning function by calculating a positioning information of the user through indoor positioning algorithms, and thereby enable illumination control through the mobile communication device according to the positioning information.

Aim of the present invention is providing a lighting system free of the above-mentioned drawbacks, preferably for indoor environment, wherein the adjusting of the lighting elements is obtained without motion and/or occupancy sensors, replacing them with a wireless communication system. In the present system, a portable device, carried or worn by a person accessing an area lighted by the system, interacts with the lighting system giving reference of its position with respect to single lighting elements.

This object is achieved by a lighting system and a method having the features of the independent claims. Advantageous embodiment and refinements are specified in the claims dependent thereon.

The lighting system of the present invention comprises:
- A plurality of lighting elements, each provided with a transmitting radio frequency device, which transmits with a pre-determined periodicity a radio signal containing a unique identifier, allowing to recognize the lighting element itself;
- At least one portable device, each portable device receiving the signals transmitted by the transmitting device embedded in the lighting element, extracting the unique identifier of the lighting element, determining the distance through the analysis of the intensity of the radio signal and transmitting said information to a centralized management device;
- The centralized management device of the lighting system, which according to the data received by the portable device specifically activates the opportune lighting elements, according to a pre-set scheme and intensity.

The system according to the present invention allows the managing of multiple user being present at the same time in a same area controlled by the centralized device.

A first advantage of the present invention is a reduction of system components, and therefore of the cost of the lighting system. A second advantage is that, thanks to the reduction of components, the reliability of the system improves. A third advantage is linked to the greater simplicity of lighting system installation, maintenance and possible reconfiguration. A fourth advantage is linked to the presence of a centralized management and control device of the lighting system, which allows an easy monitoring, even providing the fault detection of possible non-properly working elements. A further advantage is that the portable device in the form of a smartphone is a widely used device, and therefore it is not necessary to provide users with specific devices.

Further advantages and properties of the present invention are disclosed in the following description, in which exemplary embodiments of the present invention are explained in detail based on the drawings:
- Figure 1: Schematic drawing of the lighting system;
- Figure 2: Schematic drawing of the interaction between lighting system and portable device;
- Figure 3: Block diagram of the working of the operations performed by the centralized device in a first modality wherein preferences are saved in the portable device;
- Figure 4: Block diagram of the working of the portable device in a first modality wherein preferences are saved in the portable device;
- Figure 5: Block diagram of the working of the operations performed by the centralized device in a second modality wherein preferences are saved in the centralized device;
- Figure 6: Block diagram of the working of the portable device in a second modality wherein preferences are saved in the centralized device;
- Figure 7: Block diagram of an exemplary embodiment of centralized device
- Figure 8: Flux diagram of the process managing multiple user in a generic system comprising environment conditioning elements;
- Figure 9: Flux diagram of the process managing multiple user in a specific system comprising lighting elements and heat exchanger elements of a combined lighting and heating system.

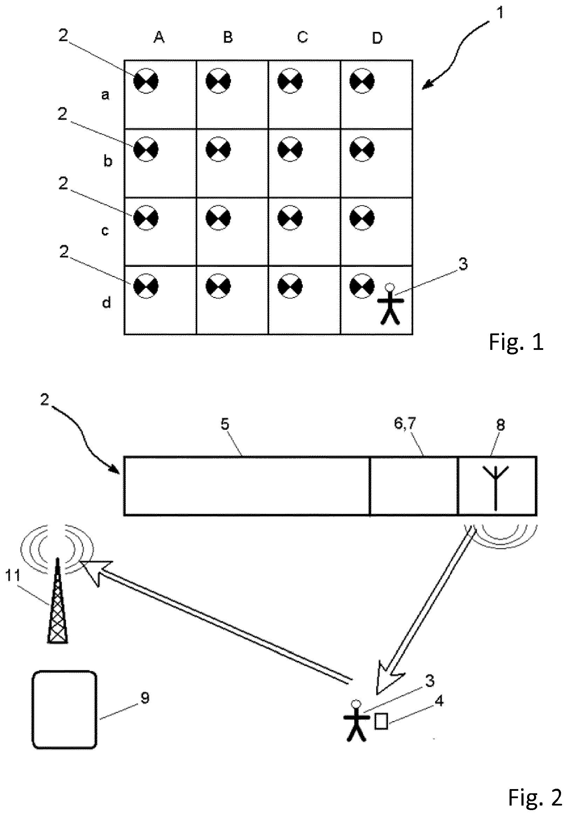

Figure 1 shows a scheme of a lighting system 1, wherein each cell aA, bA, cA, ..., dD represents an area illuminated by a single lighting element 2. As an example, in cell dD a person 3 is present. The entry of a person 3 into a cell, e.g. dD, starts the lighting of the lighting element 2 of the corresponding area dD.

Figure 2 shows a scheme of the interaction between the lighting system and a portable device 4. The lighting element 2 comprises:
- a light source 5;
- a feeding and control device 6 of the light source 5;
- a radio-transmitting device 8.
Physically the feeding, communication and radio-transmitting devices 6, 7 and 8 can be realized on the same electronic board, in order to optimize its cost.

In particular, in a preferred embodiment, the light source 5 is made of LED diodes, the feeding and control device 6 is a partialization system allowing to continuously adjust the light source 5. Moreover, the lighting element 2 comprises a communication device 7 which allows to exchange data with a centralized device 9, while the radio-transmitting device 8 transmits a signal according to Bluetooth® standard or IEEE 802.11 (Wi-Fi) standard.

The portable device 4 in a fist preferred embodiment is a portable cellular phone of known type (smartphone), provided with:
- ability to connect to a communication network according to IEEE 802.11 (Wi-Fi) standard, or ability to connect to a cell phone network according at least one ITU (International Telecommunication Union) standard, suitable for the geographic area, in order to transmit to the centralized device 9 the requests for activation;
- ability to connect according to Bluetooth® standard, or according to IEEE 802.11 (Wi-Fi) standard, in order to receive the signals of the radio-transmitting device 8;
- a specific program 10 (app) suitable for the interaction with the lighting system 1.

In a second embodiment, the portable device 4 can be a wearable device, e.g. a band, provided with:
- connection to a communication network according to IEEE 802.11 (Wi-Fi);
- ability to connect according to Bluetooth® standard, or according to IEEE 802.11 (Wi-Fi) standard, in order to receive the signals of the radio-transmitting device 8;
- a specific program 10 (app) suitable for the interaction with the lighting system 1; in this case the app works on the wearable device itself.

In a preferred embodiment, the radio-transmitting device 8 is a commercial electronic module known as beacon. A Bluetooth® beacon transmits with a pre-determined periodicity a 2,4 GHz radio signal according to the Bluetooth® standard, containing in a codified way according to the Bluetooth® standard a unique identifier for each device. Analogously, a Wi-Fi beacon transmits with a pre-determined periodicity a radio signal according to the IEEE 802.11 standard, containing in a codified way according to IEEE 802.11 standard a unique identifier for each device.

The radio-transmitting device 8, indifferently working according to Bluetooth® or Wi-Fi or other standards, in addition to the unique identifier for each device, can be optionally programmed to transmit an additional code defined by the system manufacturer, and optionally a series of additional data as e.g. information about environment temperature and humidity, natural lighting conditions, etc.

The portable device 4 receives the radio signal transmitted by the radio-transmitting device 8, and through a specific program 10, connects to a communication network 11 transmitting an activation request of the lighting element 2 and transmitting the unique identifier received by the relative radio-transmitting device 8, and other possible additional information, e.g. on natural lighting, environment temperature and humidity. In a preferred embodiment, the portable device 4 connects to a company or domestic Wi-Fi network, without the need to pass through the phone network.

In an alternative embodiment, the portable device 4 connects to a cell phone network or to a data network.

The portable device 4 incorporates a part of the control unit of the lighting system, thanks to which each lighting element that is present in a pre-set distance from the portable device 4 is recognized and univocally identified. The identification occurs thanks to the signal transmitted by the beacon of each lighting element, and comprising at least the univocal identifier of the corresponding lighting element.

The logic control program 10 uploaded in and run by the portable device 4 generates commands and data to be transmitted to the centralized device 9, which receives them through one of the above-described communication networks between portable devices 4 and centralized device 9.

The centralized device 9 is connected to the company or domestic Wi-Fi network, or alternatively, to the phone network or to the data network. The centralized device 9 receives from it the activation request of the lighting element 2 corresponding to the unique identifier indicated by the portable device 4; connects to the communication device 7 of the identified lighting element 2, and activates the adjusting and control device 6 of the lighting element 2 according to the desired parameters.

According to the invention, the switching on and off of the lighting element 2 can be controlled.

The switching on and following off of the lighting element 2 can be programmed according to a pre-determined scheme of increase and decrease of the lighting intensity. In a preferred embodiment, the switching on and following off of lighting element 2 according to a pre-programmed scheme, and at the same time controlling the switching on and off of the neighbouring lighting elements 2 according to a further pre-programmed scheme can be set. For instance, with reference to Figure 1, when a person 3 enters in the area lighted by lighting element dD, the dD lighting element 2 switches on, rapidly reaching the 100% of lighting intensity, while the neighbouring cC, dC, and cD progressively switch on reaching the 50% of the lighting intensity only. The lighting elements of the other cells are switched off. In a preferred embodiment, the lighting intensity of the lighting elements takes into account the natural environment lighting, thanks to the fact that the data transmitted by the radio-transmitting device 8 and re-transmitted after processing by the portable device 4 contain the relative information.

In a preferred embodiment, the lighting elements comprise LEDs of different type, e.g. white, orange and blue, or RGB LEDs (three-chromatic LED using red, green and blue sources): therefore, it is possible to vary the colour temperature to obtain a colder or warmer white light, or a light having a different preferred colour. Each person carrying a portable device 4 can set her/his own preference. Such preference can also be correlated to daytime, therefore the user can program e.g. a warmer light in the morning and in the evening, and a colder light in the central hours of the day.

In a further embodiment, the system can be used to adjust other environment parameters in addition to switching on/off the lighting systems. In addition, the system can manage the adjusting of environment cooling/warming, or activate the working of some apparatuses like computers and printers, or the access to given rooms. E.g., the entry of a user into her/his office could start the temperature and humidity adjusting of her/his office on a pre-set value, start her/his computer, and when the user moves towards the printer room, could start the printing of the documents printed by her/his computer.

Referring to the practical realization of the connection between the centralized device 9 and the communication device 7, different ways to perform the communication among different devices inside a pre-defined area are known. In the preferred embodiment, the communication between centralized device 9 and the communication device 7 placed inside lighting elements 2 is a power line communication system using one of the in-use LonWorks, PowerDom, HomePlug standards, or other standards that should become successively available.

According to an embodiment, the communication device can be an input port for the configuration of a processor for the control of the radio-transmitting device 8, i.e. of the beacon. In this case, the port for inputting the setting parameters of the radio-transmitting device 8 is improperly exploited for transmitting the control commands for the adjusting and control device 6 of the lighting element 2 to the control processor of the radio-transmitting device 8. In said processor, a communication program is loaded communicating to the adjusting and control device 6 of command signals generated in the centralized device 9 and received by said centralized device 9. To this aim, the processor comprises at least an output port to which an entry for the command signals of the adjusting and control device 6 is connectable.

In particular, with Bluetooth® beacons, said solution has the advantage of not needing a transmitting receiving section of traditional type, therefore with relatively heavy hardware and firmware. Instead, the present solution exploits an already present connection port, dedicated to the reception of beacon configuration signals from an external device; with a specific software, this allows to receive and re-transmit command signals generated by an external device through an output port.

In a different embodiment, the communication between the centralized device 9 and the communication system embedded in the lighting elements 2 is a cabled system dedicated to the communication.

The system can work according to two main modes:
- the options chosen by the user are saved inside the portable device 4;
- the options chosen by the user are saved in the centralized device 9.
Naturally, further (not illustrated) working modes of the system are possible, which use in part the logic flow of the two illustrated modes.

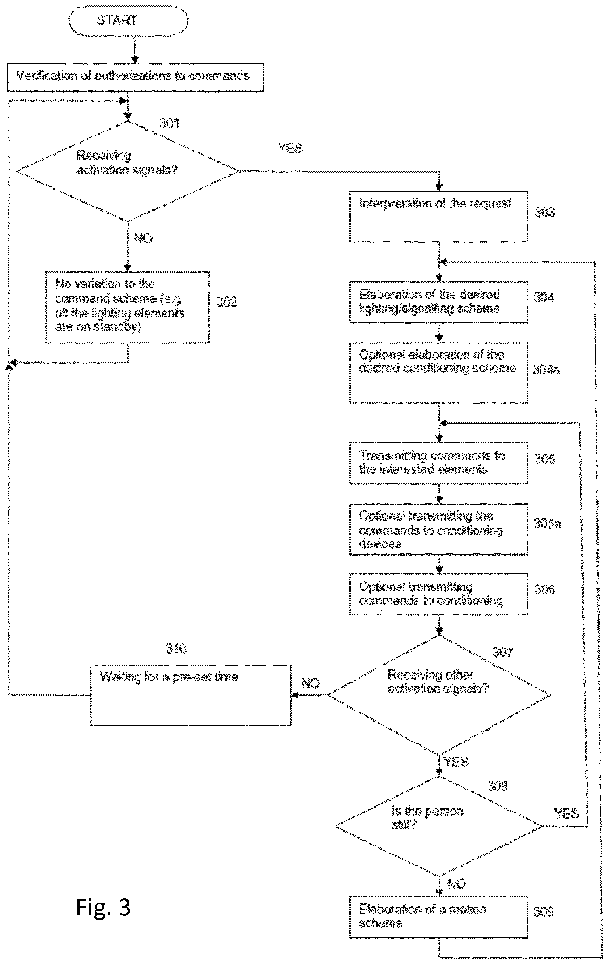

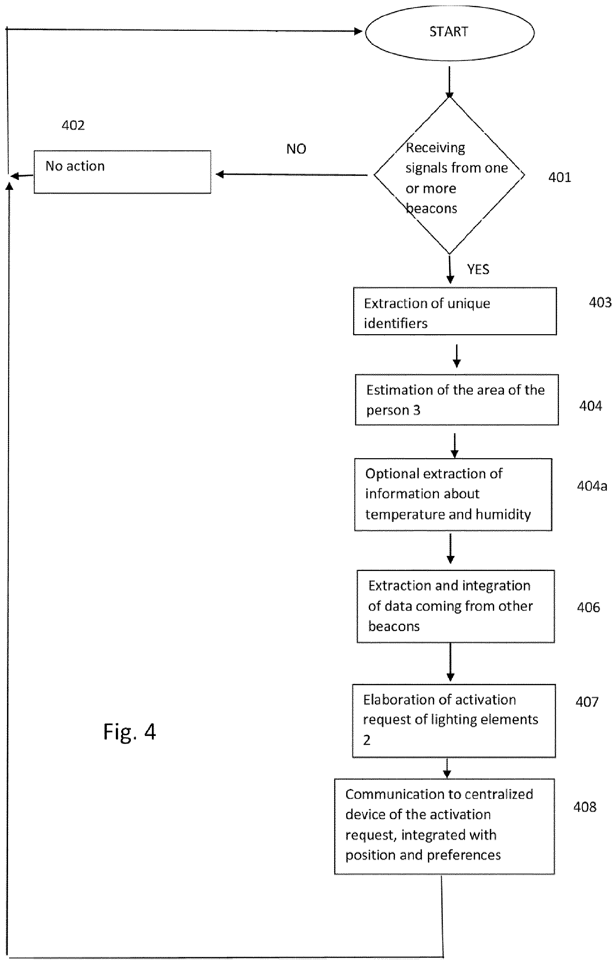

Figures 3 and 4 are block diagrams illustrating the working of the lighting system 1 on the whole, in the first mode wherein preferences processing is managed by the portable device 4.

In particular, the block diagram of Figure 3 refers to the logical sequence of the operations performed by the centralized device 9. The centralized device 9 waits for activation signals coming through the communication network 11 (step 301): until no signal is received, all the lighting elements 2 are switched off, or maintained at a pre-set level (step 302). When the centralized device 9 receives from the communication network 11 an activation signal, and it is recognized that said signal possesses suitable authorizations to impart a command, the request received by the portable device 4 is interpreted (step 303). The desired lighting scheme (step 304) and optionally the desired conditioning scheme (temperature and humidity) (step 304a) is elaborated; the corresponding command is transmitted to the communication device 7 of the interested lighting element 2 (step 305) and optionally the corresponding commands are transmitted to the conditioning device (step 305a). According to the desired lighting scheme, activation commands can be transmitted to the communication device 7 of the neighbouring lighting elements 2 (step 306). The centralized device 9, after a pre-set time, waits for activation signals again (step 307). If it does not receive any signal, after a pre-set waiting time (step 310) it brings back system 1 to a waiting cycle, with lighting elements 2 on standby. On the other end, if it receives other activation signals (step 307), it compares the received activation code with the previous one, determining whether the person 3 is still or moving (step 308): if the person 3 did not move, the activated lighting scheme is maintained (step 305 and 306). If the person 3 is moving, a new lighting scheme is elaborated (step 309) always according to the above-illustrated logic, and the respective commands are transmitted (step 304, 305 and 306).

Figure 4 is a block diagram referring to the logic sequence of the operations performed by a portable device 4. The portable device 4 waits for receiving signals from the radio-transmitting device 8 (step 401); until it does not receive signals, it keeps waiting without performing any action (step 402). When the portable device 4 receives a signal from a radio-transmitting device 8, it extracts the unique identifier, and if it receives more than one signal from radio-transmitting devices 8, it extracts their unique identifiers, too (step 403). Then, according to the received unique identifiers, and on the trend of the power levels received from the various devices in the last period, the portable device 4 estimates in which area it is (step 404). Then it optionally extracts the additional information contained in the signal packet received by the radio-transmitting device 8, e.g. about temperature and humidity (step 404a). In case of receiving packets originating from different radio-transmitting devices 8, it extracts the data of these radio-transmitting device 8 too, and integrates them (step 406). Then the portable device 4, taking into account the localization area, the received additional information, and the preferences of the person 3 pre-set in the portable device 4 (step 407), elaborates the activation request of the lighting elements 2 (step 408), then transmits such request through the communication network 11. After all that, the portable device 4 proceeds to waiting for signals (step 401).

In practice, the portable device 4, provided with the specific program 10, can analyse the intensity of the radio signal received by the radio-transmitting device 8. According to the intensity of the received signal, the specific program 10 can detect the distance of the person 3 from the radio-transmitting device 8. Including this information in the activation request, the centralized device 9 can detect whether the person 3, provided with the portable device 4, is moving, and if yes, towards which direction. Such detection can be very precise (resolution better than some metres) when the portable device 4 receives signals from at least three radio-transmitting devices 8, which is very probable in a domestic or working environment. In this way, the centralized device 9 can transmit the commands relating to the activation according to different pre-set schemes to the adjusting and control device 6 of the neighbouring lighting elements 2 and to the conditioning devices. E.g., if the person 3 in the cell dD is moving approaching cell cD, the centralized device 9 can command the control systems 6 of the cells dC and cC to switch on at 20% of their lighting intensity, to cell cD to switch on at 50%, and to cell bB to switch on at 20%. The lighting scheme activated in each case takes into account the static nature or the motion of the person 3, the direction of her/his motion, and the topography of rooms (e.g. presence of walls, partitions, etc.).

The person 3 through the interface of the specific program 10 can set all her/his individual preferences. In a preferred embodiment, the specific program 10 has the form of an app loaded on the smartphone of person 3.

In practice, at the moment of its first use, the specific program 10 leads the person 3 in setting her/his favourite parameters. Once said parameters have been set, the smartphone waits for a valid Bluetooth® or Wi-Fi signal by the lighting system 1. When the person 3 enters into the lighting system 1, the smartphone receives at least a valid Bluetooth® or Wi-Fi signal, detects its intensity, calculates the distance from at least a lighting element 2 and transmits said information, with the pre-set preferences of the person 3, to the communication (phone or Wi-Fi) network 11. The centralized device 9 receives said data from the communication network 11 and transmits the corresponding commands to the adjusting and control device 6 regulating the light source 5 of the lighting element 2 nearest to the person 3, and possibly of the neighbouring lighting elements 2, and optionally of the conditioning devices.

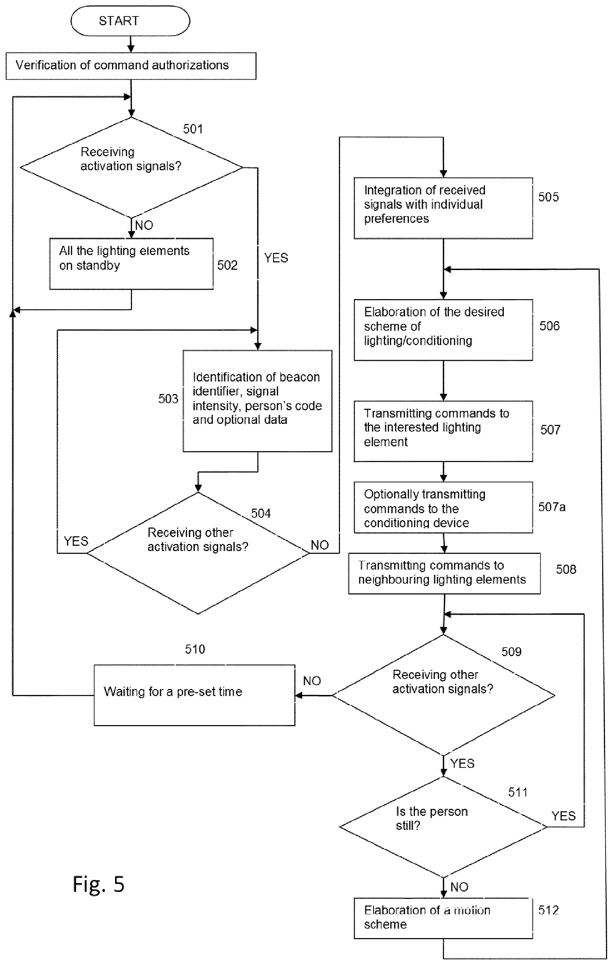

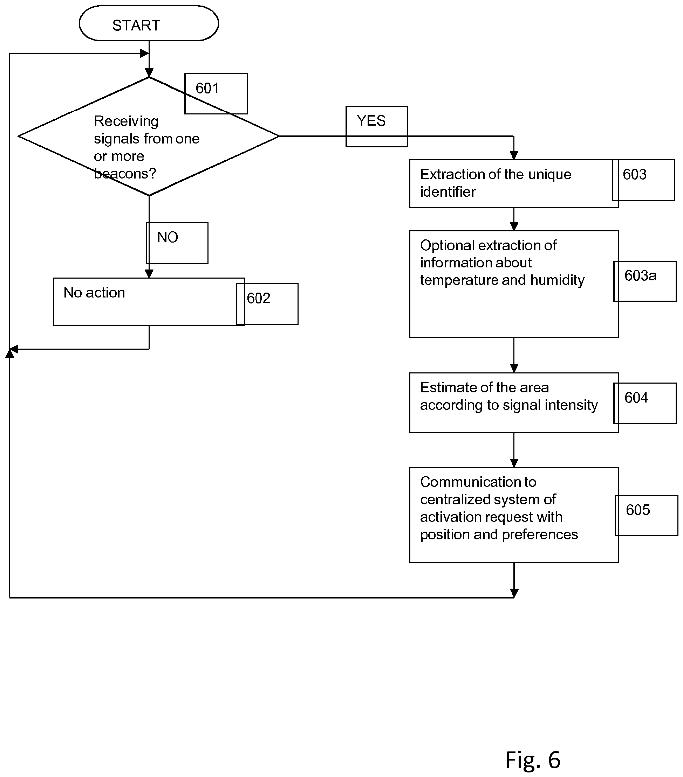

Figures 5 and 6 are block diagrams illustrating the working of the lighting system 1 on the whole, in its second mode, wherein the preference elaboration is managed by the centralized device 9.

Figure 5 refers to the logic sequence of the operations performed by the centralized device 9. The centralized device 9 waits for receiving activation signals through the communication network 11 (step 501): until no signal is received, all the lighting elements 2 and optionally the conditioning devices are switched off, or kept at a pre-set level (step 502). When the centralized device 9 receives an activation signal from the communication network 11, the request received by the portable device 4 is interpreted by identifying the unique identifier of the radio-transmitting device 8, calculating its distance from the portable device 4 according to the intensity of the received signal, identifying the code of the person 3, and extracting the possible optional data (step 503). It is verified whether further identification signals are received (step 504). If yes, steps 503 and 504 are repeated the number of times necessary to identify all the signals. All the received signals are integrated with their respective individual preferences (step 505), the desired lighting scheme and optionally the conditioning scheme are elaborated (step 506); the command corresponding to the communication device 7 of the interested lighting element 2 (step 507), and optionally the commands to the conditioning system (step 507a) is transmitted. According to the desired lighting scheme, and optionally to the conditioning scheme, activation commands can be transmitted also to the communication device 7 of the neighbouring lighting elements 2 (step 508). The centralized device 9 after a pre-set time waits for activation signals (step 509). If it does not receive any, after a pre-set time, it brings back the lighting system 1 to the waiting cycle (step 510), with lighting elements 2 on standby, and optionally conditioning devices. On the other hand, if it receives other activation signals, it determines whether the person is still or moving (step 511): if the person 3 is still, the already activated lighting and optionally conditioning scheme is maintained (step 506, 507, 507a, e 508). If the person 3 is moving, a new lighting scheme is elaborated (step 512), always according to the above-described logic and the respective commands are transmitted (step 506, 507, 507a, e 508).

Figure 6 is a block diagram referring to the logic sequence of the operations performed by the portable device 4. The portable device 4 waits for signals from the radio-transmitting device 8 (step 601); until it receives signals, it keeps waiting without performing any action (step 602). When it receives a signal from a radio-transmitting device 8, it extracts the unique identifier (step 603), optionally extracts additional information e.g. about temperature and humidity and natural lighting (step 603a), it measures the area in which it is according to the trend of the signal intensity of the received radio signal (step 604). Naturally, if the portable device 4 receives signals from more than one radio-transmitting devices 8, it integrates and homogenizes the received information, and estimates the area in which it is according to the trend of the various received radio signals (step 604). Then the portable device 4 transmits to the communication network 11 the activation request with the extracted data, signal intensity and code of the person 3 (step 605). After all this, the portable device 4 goes back to waiting for signals (step 601).

In practice, at the moment of its first use, the specific program 10 leads the person 3 in setting her/his favourite parameters. Once said parameters have been set, the smartphone transmits them to the centralized device 9 that saves them. Consequently, should the person 3 loose/replace her his smartphone, her/his profile is saved in the centralized device 9. Later the smartphone starts to wait for a valid Bluetooth® or Wi-Fi signal from the lighting system 1, and optionally from the conditioning system. When the person 3 enters into the area lighted by the lighting system 1, the smartphone receives at least a valid Bluetooth® or Wi-Fi signal, extracts the data, determines its intensity, calculates the distance from the lighting element 2 and transmits such information to the communication (phone or Wi-Fi) network 11. The centralized device 9 receives such data from the communication network 11, integrates them with the data received from other beacons, elaborates them according to the preferences set by the identified person 3, and by possible other persons 3 present in the same area, and transmits the corresponding commands to the adjusting and control devices 6 adjusting the light sources 5 of the lighting element 2, optionally to the conditioning device nearest to the person/s 3 and possibly to the neighbouring elements.

The system can be used also for actively signalling the person 3 that she/he is in an area of interest. This is particularly interesting in case of wide point-of sales, inside which an ever-increasing number of consumers uses her/his smartphone. Through specific programs (apps), the smartphone saves shopping lists. In the points-of-sale not only lighting of area is present, but increasingly also indoor accent lighting, with the possibility of placing a single lighting element even on a single shelf for displaying goods.

In a preferred embodiment, the lighting system 1 can be used to lead the person 3 to a product that is present in her/his shopping list, managed by the app on her/his smartphone. As a practical example, let us imagine that the person 3 has "beauty cream" in her/his app managing her/his shopping list. The centralized 9 device can make an enquiry on the planogram of the products displayed in the point-of-sale, obtaining the information that "beauty creams" are in the area dD. When the person 3 enters into the area dD, the centralized device 9 can activate a lighting signal (intermittence, repetitive fading or other) in the lighting element placed right above the beauty cream, calling the attention of the person 3. In this way, customer's research is shortened, or customer's choice is lead to a promotion beauty cream, or to a beauty cream provided with given characteristics.

In the above-described lighting system 1, the information referring to the environment conditions (e.g. temperature, humidity, natural lighting) are contained in the data transmitted each time by the beacon emitting its radio signal. Such information is then re-transmitted by the portable device 4 to the centralized device 9 only when at least a person is present inside the lighting system 1. This prevents the overloading of the centralized device 9 with a quantity of non-interesting information, referring to areas wherein persons are not present.

In an alternative embodiment, is nonetheless possible that the information referring to environment conditions (e.g. temperature, humidity, natural lighting) is transmitted to the centralized device 9 through the powerline communication network, so as to allow an environment monitoring, even in the absence of persons inside the lighting system 1. This increases the load of the centralized device 9 and of the powerline network, but has the advantage of allowing a constant monitoring of the whole system, detecting possible faulty elements, and also elaborating use statistics by all the users on the energy consumption, on the temperatures detected in the different areas, etc. This system could also manage alarms, e.g. very high temperature and anomalous lights in the environment could trigger a fire alarm.

Both in the case that individual preferences are saved in the portable device 4, and in the case that individual preferences are saved in the centralized device, when a plurality of persons enters into a room, using a logic different from the individual preferences is possible.

For instance, if two persons with different individual preferences are in the same room, the centralized device 9 can set lighting and conditioning to intermediate values between the preferences of the single persons. Alternatively or in combination, if several persons are in the same room, e.g. identified as a meeting room, further working modes can be activated (e.g. in the meeting room shutters can be opened, light can be switched on, and conditioning can be started).

According to one embodiment of the present invention the centralized device 9 generates a time varying list of users which are present in the area where the lighting system and/or other environment conditioning systems, like for example heating or air conditioning or systems opening or closing windows, doors or similar, are under control of the centralized device. Each user which is present in the area is identified by an ID to which specific individual preferences relating to the lighting and or the other environmental conditions are univocally associated, for example in the form of sets of values of characteristic parameters for the lighting and/or the other environment conditioning systems. The centralized device is configured to calculate setting parameters of the lighting system and/or of the other systems conditioning the environment according to a trade-off function between the different individual preferences of the said settings of each user which is present in the area under control of the centralized device.

Several different functions may be used. A first basic function is a mean function calculation of the mean value of each parameter as a function of the values of the same parameter according to the preferences of each individual user which presence has been revealed in the area under control of the centralized device 9.

Any kind of mean function can be used.

According to a further improvement, the centralized device is provided with a memory in which typical settings of the lighting system and/or of one or more other environment conditioning systems are stored. These typical settings may vary as a function of the natural lighting conditions and/or of the meteorological conditions according to measured parameters and/or of a look-up table. The values of the typical settings of the characteristic parameters may be used for determining weights in order to calculate a weighted mean setting of the said characteristic parameters as a function of the individual settings of the persons which are present in the area controlled by the centralized device.

In this case, the weight for each individual setting of each parameter can be calculated as a function of the difference between the value of the parameter according to the individual setting and the value of the said parameter according to the above defined typical settings.

According to an example, in the area controlled by the centralized device a number i (i=1,..,N) of lighting elements is provided as well as t (t=1,...,R) . Furthermore there are provided a heating system comprising at least one heat generator and a number j (j=1, ...,M) of heat exchangers distributed in the area controlled by the centralized device 9 as well as k, (k=1, ...., Z) temperature sensors. Each lighting element may be driven according to different operating parameters, which can be a single parameter such as light power, or light colour, duration of the power on phase, etc. or by a combination of parameters. Both alternatives being indicated by the parameter *PLEᵢ*. Similarly, the heat transfer from the different heat exchanger may be controlled by a setting parameter of the temperature of the heat delivering element of the heat exchangers and/or from the control of the thermal energy fed to each heat exchanger and/or from the period during which the heat exchanger is activated. As in the lighting case one of the said parameters or a combination of one or more of the said parameters is defined here as *HXⱼ.*

The temperature values measured by the k-th temperature sensors is indicated as *Tₖ* and the light intensity measured by the t-th light sensor is indicated by the parameter *LIₜ.*

For each user U the individually defined settings of the above defined parameters are indicated as ${PLE}_{i}^{u}$ and ${HX}_{j}^{u} .$

The typical settings of the above parameters are indicated as ${PLE}_{i}^{T}$ and ${HX}_{j}^{T} .$ These typical settings may depend also from the environmental conditions such as light intensity and meteo conditions which are defined by the measured parameters from the sensors so that the typical settings are further indicated as a function of the data measured by the temperature sensors and by the light intensity sensors ${PLE}_{i}^{T} \left({LI}_{t}, {T}_{k}\right)$ and ${HX}_{j}^{T} \left({LI}_{t}, {T}_{k}\right) .$

The weights for each setting parameter for each individual user can be defined as a function *ωᵤ*: where for the light element driving parameters the weights are determined as ${ω}_{u} \left({PLE}_{i}\right) = f \left({‖ {PLE}_{i}^{T} \left({LI}_{t}, {T}_{k}\right) - {PLE}_{i}^{u} ‖}^{- q}\right)$ and for the heat exchangers driving parameters the weights are determined as ${ω}_{u} \left({HX}_{j}\right) = f \left({‖ {HX}_{j}^{T} \left({LI}_{t}, {T}_{k}\right) - {HX}_{j}^{u} ‖}^{- p}\right)$ with *q*,*p* ∈ (*positive rational numbers*).

The function f may be any function and can be also non linear, so that higher differences between the typical everyday standard settings, such as intensity of lighting or temperatures in residential or professional environments, and the individual preferences of each user have a reduced effect on the means value of the setting to be applied determined as a function of the weighted individual settings.

According to the above, the settings of the parameters which the centralized device 9 may apply to the lighting elements of the lighting system and to the environmental conditioning systems which according to the specific, non-limiting example is a heating system are:
For the lighting elements: ${PLE}_{i} = {F}_{mean} \left({w}_{u}\left({PLE}_{i}\right)∗{PLE}_{i}^{u}\right) ;$ with u indicating each of the U-th user present in the area controlled by the centralized device.
For the heat exchangers: ${HX}_{j} = {F}_{mean} \left({w}_{u}\left({HX}_{j}\right)∗{HX}_{j}^{u}\right) ;$ with u indicating each of the U-th user present in the area controlled by the centralized device.

It has to be noticed here that the typical standard settings may be also determined by laws or regulations or in special cases by safety rules.

According to a further feature, the typical standard settings may be also determined by a special scope or activity which has to be carried out in the area controlled by the centralized device.

Still according to another feature the area controlled by the centralized device 9 can be divided into sub-regions comprising a subset of the lighting elements and of the environment conditioning elements and the users shall be also identified as being part of a group of users which are inside one or more of the sub regions for a specific task or reason, such as for example carrying out a common activity or a team activity with the other user in the same sub region or sub regions.

According to still another embodiment, the function for determining the settings of the parameter to be applied from the individual preferences of each user in the area controlled by the centralized device or in one or more sub regions of the said area is also dependent from the position of each user in the said area. In this case the position data relative to each lighting and/or environment conditioning element of each user can be used for determining the weight to be associated to the user specific settings in combination or alternatively to the above disclosed criterion of the difference between individual settings and standard settings or event specific or activity specific settings.

The centralized device 9 may receive specific data from each user being part of a team or group of users or may determine such kind of condition by determining the distance of each user from other user and calculating out of the said distances by means of predictive or statistic algorithms the probability that each user may be part of a team or group.

According to still another improvement, the centralized device 9 may be configured to carry out statistic or predictive algorithm which analyses the performances of the settings applied as a function of the individual preferences of several users and upgrades the algorithm for calculating the settings of the parameters to be applied out of the individual settings of the users based on the said performances.

In this case, the algorithm for determining the setting to be applied may be for example a classification algorithm or a neural network and the centralized device may be configured to carry out the said algorithm or to communicate with a processing unit carrying out the said algorithm.

The above functions and the predictive algorithm disclosed above may be in form of a software code, which is executed either directly by the centralized device or by a processing unit communicating with the centralized device and specifically configured to executing the said code.

In the following examples of a system according to the present invention and managing multiple user being present at the same time in a same area controlled by a centralized device, the system may be configured according to one or more of the combination of features of the example of figures 1 to 6.

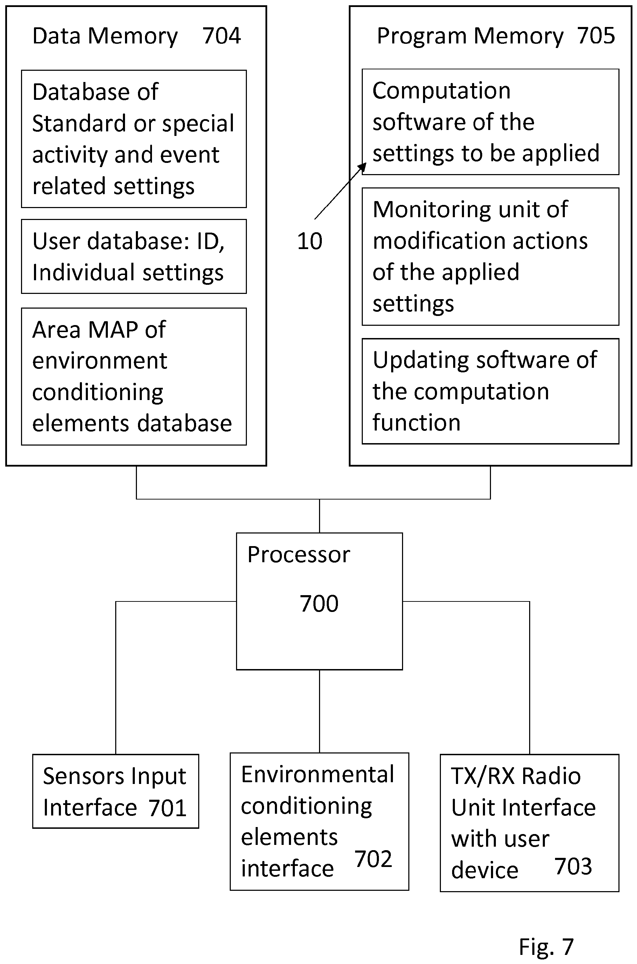

Figure 7 is a block diagram illustrating the structure of a centralized device 9 which can operate by managing multiple user. Each user has an individual portable device 4 and in the area controlled by the centralized device 9 there are distributed a number of environmental conditioning elements, for example the lighting elements 2 of a lighting system 1 or other kind of environmental conditioning system according to the present description. The centralized device comprises a processor receiving measured signals from one or more sensors through a sensor input interface 701. The sensor may monitor some environmental condition describing parameters such as intensity of light, temperature, moisture and other parameters. The data collected by the processor through the interface 701 is saved in a memory area not shown in detail. The centralized device furthermore controls through an environmental conditioning elements interface 702 each of the environmental conditioning elements which are present in the area controlled by the centralized device, for example the lighting elements 2. Thanks to a radio interface 703 operating according to one or more communication protocols such as for example WIFI or Bluetooth or similar, the centralized device can communicate with other units as for example each one of the portable devices 4 of the users which are present in the area controlled by the centralized device.

The processor 700 manages also a memory which has two main areas 704 for saving data as a databases for example of Standard or special activity and event related settings of the driving parameters of the environmental conditioning system and of the corresponding environmental conditioning elements of the said system, a User database comprising the ID of each user and the corresponding individual settings of the driving parameters of the environmental conditioning elements and a map of the controlled area with the distribution over the said area of the environmental conditioning elements of each of the environmental conditioning systems set under control of the centralized device.

The other memory area 705 is dedicated to store the software programs comprising the instructions of the processor 700 for carrying out the tasks of the centralized device 9.

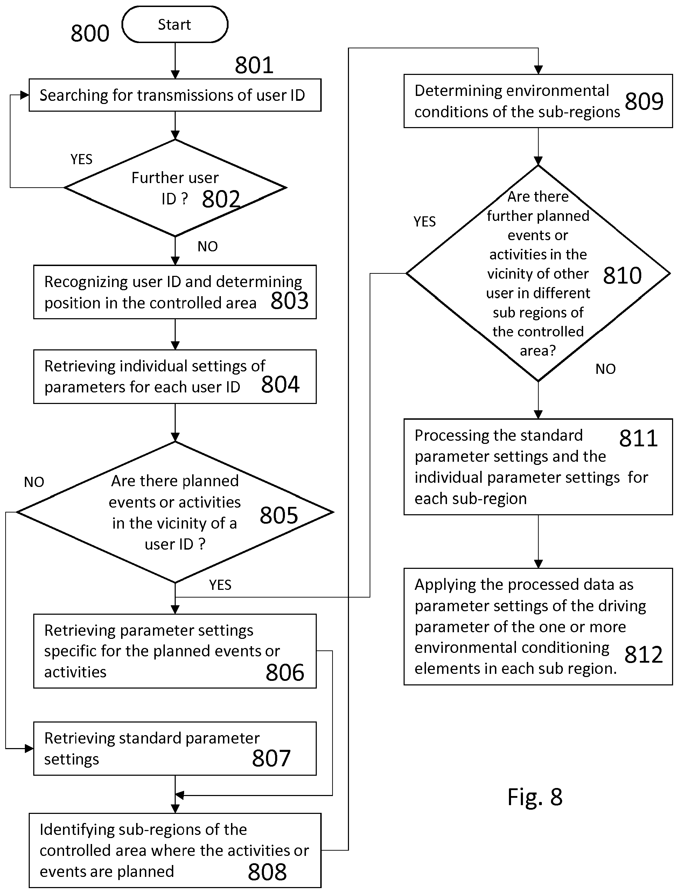

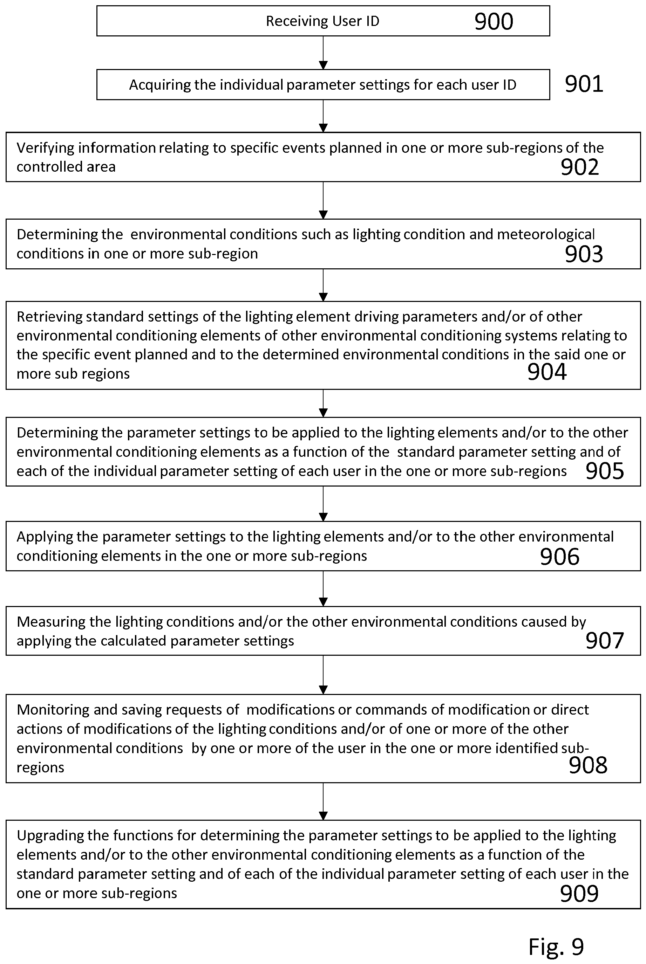

According to one example of configuration of the programs executed or which may be retrieved and executed by the centralized device,, the said memory area is dedicated for storing a computation software for determining the settings to be applied to environmental conditioning systems as a function of the individual settings of each user which is present in the controlled area or in sub-region of the said controlled area as it will be explained in combination with the flux diagrams of figures 8 and 9.

According to an improvement, there is provided a software monitoring the performances of the settings applied in terms of acceptance by the user in the area where the environmental conditioning elements are activated and for updating the function calculated by the calculation software in case the applied settings has been manually or remotely modified because not tolerated by at least one user or a group of users. The centralized device is thus a combined hardware and software device.

According to the example of Figure 7, the individualised settings of each user are univocally associated to the corresponding user ID and the data is stored in the memory area 704 of the centralized device. According to this option, when the portable user device 4 of a user comes at a certain distance from a communication device 7 associated to an environment conditioning element such as a lighting element of the example of figures 1 to 6, the portable device 4 recognizes the distance from the communication device 7 and sends this data to the centralized device 9 where the settings according to the user preference are read from the database stored in the centralized device 9.

According to a further possible option already disclosed in the preceding description the individual user settings are stored in the portable device and are transmitted by the portable device either to the centralized device which controls the environment conditioning system, or the individual settings can be directly transmitted from the portable device to the environment conditioning elements of the system.

Figures 8 shows a flux diagram describing the functionality of the present invention according to the option in which the individual settings of each user are stored in the memory 704 of the centralized device. The process starts according to the steps described above and in the flux diagrams of Figures 3 to 6. The centralized device 9 searches at step 801 for portable devices 4 of users transmitting at least their ID. Cyclically the centralized device repeats the scanning for further users portable devices 4 and the corresponding IDs as indicated by the step 802.

After the steps of recognizing the user IDs at 803, the centralized device searches the user database for the individual preferences relating to the settings of the system for each user ID and retrieves the individual settings as indicated at step 804. The position of the user in eth area controlled by the centralized device 9 is also calculated according to the steps disclosed in relation to the previously described embodiments.

An optional step indicated by 805 consists in determining if specific events or activities are planned at the position of the user and if yes in retrieving at step 806 information about special settings of the parameters of the environment conditioning elements as for example the lighting elements 2 and/or other elements related to events which will take place in the vicinity of the position of each user or related to activities that the user will have to carry out at its position.

If no event or activity is planned, then the standard settings for the elements in the vicinity of a user are loaded as indicated at step 807.

In step 808 the area under control of the centralized device is further scanned for determining one or more sub regions of the said area in which the planned event or the planned activities will be also carried out.

For each sub-region, the environmental conditions are determined at step 809 by means of the characteristic parameters describing the said conditions which are measured by one or more sensors or probes connected to the centralized device 9.

Each sub-region is recursively scanned by the loop 810 and the steps 805 to 810 are repeated for every user in the area controlled by the centralized device and for every sub-region.

Referring to the embodiment of Figure 1 which is related to a lighting system, the area controlled by the centralized device 9 is the matrix comprising the sixteen sub-regions defined by the columns A to D and the rows a to d. In the example, each sub region is provided with an environment conditioning element in the form of a lighting element 2, but it is clear that each sub-region can be associated to more than one element of more than one kind as it will appear also from the following embodiment of figure 9.

The data relating to the parameter settings according to each individual preference of each user identified in the area or at a certain distance from a sub-region or within a sub-region and the data relating to the standard settings, or to the special settings related to specific planned events or specific activities to be carried out are processed by the processor at step 811 for determining, according to an algorithm or a function coded in the computing software executed by the centralized device 9, the settings to be applied to the elements of the environment conditioning system as a function of the individual preferences of each user present in the area controlled by the centralized device 9 or in certain sub regions of the said area and of the standard and/or event or activity specific settings. At step 812, the settings resulting from the processing activity as a function of the individual preferences of each user present in the area controlled by the centralized device 9 or in certain sub-regions of the said area and of the standard and/or event or activity specific settings are then applied to the elements of the environment conditioning system.

The system can be of any kind and even more systems may be provided operating at the same time on different environment conditions in an area controlled by a centralized device 9 according for example to the one described in relation to figure 7.

As already indicated above, many variants of the above-described embodiment are possible which are disclosed in the description of the previous examples of Figures 1 to 6 or which are simply obvious modifications or combinations of the different disclosed embodiments.

The process according to figure 8 may be applied at the same time for different environment conditioning system which may coexist in an area coinciding at least partially with the area controlled by the centralized device.

In the previous description, embodiments of different possibly coexisting environment conditioning systems have been disclosed. In Figure 9 the process according to the present invention is described for an embodiment in which in the area controlled by the centralized device 9 a lighting and a heating system are provided which are both controlled and managed by the system according to the present invention.

In a similar way as in the previous embodiments a user entering the area controlled by the centralized device detects by means of its portable device 4 the signals transmitted by one or more beacons associated to or integrated with the control units of each lighting element and each heat exchanger which is installed in the area.

Based on the strength of the one or more signals received, the position of each user entering the area can be determined and the portable device of each user sends the user specific ID to the centralized device 9 as indicated at step 901. Depending on the one of the two options already disclosed, the settings according to the individual preferences of each user are recalled from a database stored in the memory 704 of the centralized device, or these settings are sent by the portable device 4 of each user together with the corresponding user ID. This step is indicated at 901 in figure 9.

As a further step which can also be omitted and which is described only for sake of completeness as a preferred possible improvement, as indicated with 903 for each user the centralized device 9 or also the portable device 4 of the user will check if there is information related to possible events or activities planned in the area or in one or more sub regions of the area. The step 903 may be carried out for the entire area, or for each user in the sub region in which the user is located and in the sub-regions directly surrounding this one.

At step 903 the environmental conditions are measured in the area controlled by the centralized device and according to this as disclosed in the previous description at step 904 the standard or the event specific or the activity specific settings can be retrieved from a database also taking into account the environmental conditions revealed at step 903. Similarly to the settings according to the user preferences, the data relating to these standard, event specific and activity specific settings may be in a database stored in the memory of the centralized device or in the memory of the portable devices of the users.

At step 905 the parameter settings to be applied to the lighting elements and/or to the other environmental conditioning elements such as the heating system are determined as a function of the standard parameter setting and/or the event specific and/or the activity specific settings and of the individual parameter setting of each user in the one or more sub-regions according to the functions previously disclosed in the description. At step 906 the computed settings are applied to the lighting and to the heating systems.

According to this example, further steps may be provided which helps in upgrading the functions for computing the settings to be applied and the databases of the settings. The environmental conditions and in this case the temperature and the light intensity and/or colour in the area controlled by the centralized device is measured by one or more sensors and the result is compared with the desired one. Discrepancies are registered as well as actions by the users through the portable device 4 or directly on the lighting elements 2 or on the heat exchangers of the heating system directed to modifying the settings of the said elements are registered in order to determine the fitness of the computed settings to be applied and to use the results for upgrading the functions as indicated by the steps 907, 908 and 909.

These further steps 907 to 909 are most efficient when the function for determining the settings of the parameters to be applied is not an analytical function, but an expert system such as a classifier or a neural network or other predictive systems.

A genetic algorithm can also be used for determining the settings to be applied out of the individual preferences of the users, which are present in the area at the same time.

In this case, the expert systems will learn from the feed-back data determined at step 907 and 908 and will automatically upgrade in order to improve the fitness of the computed settings.

It is worth underlining that the main task of the described system is adjusting the switching on/off of the lighting elements 2. Nonetheless, it is possible that in the central hours of the day the lighting system 1 detects a series of parameters like lighting, temperature, humidity, and of those, only temperature and humidity have to be adjusted in that lighting conditions are already sufficient. In some circumstances, it might happen that nothing has to be adjusted, in that the environmental and lighting conditions detected by the sensors are already corresponding to the values set by person 3. Further, it is possible using the lighting elements 2 as monitoring seat of the presences and of the activities of the persons 3, or of detection of parameters different from lighting, and using the lighting system 1 for adjusting parameters totally different from lighting (temperature, humidity, etc.).

According to still another embodiment, the above system can be also used for triggering the display of user specific static or video messages on one or more screens which are located in the area controlled by the centralized device. In this case, when the portable device of the user reveals that the user is in the vicinity of one screen the portable device sends information on the user profile and the system automatically displays communications or videos which are tailored on the profile of the user.

In this case, the system may operate mutatis mutandis according to one or more of the different embodiments disclosed above in relation to the lighting system or to other environment conditioning systems.

## Claims

1. A Lighting system (1) configured to detect presence/absence of at least a user and adjust switching on/off of one or more lighting elements consisting in increasing and decreasing the light intensity of a respective one of said one or more lighting elements between a minimum and a maximum according to a pre-set scheme, the lighting system comprising
- a plurality of lighting elements (2), wherein each lighting element comprises an radiofrequency transmitting device (8) embedded in the lighting element and configured to transmit with a pre-set periodicity a radio signal containing at least a unique identifier, thereby allowing identification of the corresponding lighting element, and an adjusting and control device provided with a communication system (7);
- at least one portable device (4), wherein each portable device is configured to be carried by a user (3) and to receive the radio signals transmitted by the radiofrequency transmitting devices embedded in the lighting elements, wherein each portable device has a specific program loaded in and run by the portable device, said program being adapted to extract the unique identifiers of the lighting elements and to respectively detect the distance of the portable device from at least some of the lighting elements through analysis of intensity or power of the radio signals transmitted by the radiofrequency transmitting devices of said some of the lighting elements and received by the portable device for determining whether the user carrying the said portable device is moving and, if yes, towards which direction, and for determining the nearest lighting element and the neighbouring lighting element to said nearest lighting element; and wherein each portable device is configured to radio-communicate this information to a centralized device managing said lighting system together with at least the received unique identifiers of said some of the lighting elements and optionally a user identifier;
- the centralized device (9), wherein the centralized device comprises a control device configured to store standard settings and to manage the lighting system by activating the lighting elements by means of commands to the corresponding adjusting and control devices via their communication systems, wherein said activation occurs either by commands generated by the control device according to data received from the at least one portable device and respectively according to a scheme of switching on and following off the lighting element which is nearest to a user, and, potentially, of neighbouring lighting elements thereof, by increasing and decreasing of the light intensity of the lighting , wherein said scheme is pre-set by said user by input through said specific program run by the portable device and stored in the portable device or in the centralized device, or by commands generated by the control device according to the standard;
**characterized in that**:
- either the centralized device, or a remote processing unit communicating with the centralized device and being comprised in the lighting system, is configured to manage multiple users of the lighting system by having loaded in and running a multiple user managing program,
- wherein each user carrying a portable device and has an individual lighting scheme and an intensity setting for the lighting elements stored in the portable device or in the centralized device;
- wherein the said multiple user managing program is adapted to acquire the lighting scheme and the intensity setting of each user being present in the area under control of the centralized device and to compute, based on said schemes and intensity settings and according to a trade-off function between different individual preferences, a lighting scheme and an intensity setting to be applied to the lighting elements; and
- wherein the centralized device is configured to control the lighting elements according to the result of the computation.

2. Lighting system according to claim 1, wherein the lighting scheme and intensity setting is computed as a mean function of the acquired lighting scheme and intensity setting of each user (3) communicating by means of the associated portable device (4) with the centralized device (9).

3. Lighting system according to claim 1 or 2, wherein a standard scheme and intensity setting for each lighting element (2) is pre-set by each user and stored in the centralized device (9) and wherein each scheme and intensity pre-set by each user (3) is weighted, the weight to be applied to the scheme and intensity pre-set by a user (3) being determined as a function of the difference between the standard scheme and intensity set and the scheme and intensity pre-set by the said user (3).

4. Lighting system according to claim 1, wherein the centralized device (9) is configured to determine a standard scheme or intensity set i according to a natural lighting condition measured by means of one or more sensors communicating the measured data to the centralized device (9).

5. Lighting system according to one of the preceding claims 1, 3 or 4, wherein the scheme and intensity setting is computed by means of a non linear classifier or predictive algorithm.

6. Lighting system according to claim 3, wherein the weight to be applied to the scheme and intensity pre-set of a user (3) is computed also as a function of the distance of the user (3) or of the portable device (4) of this person from the lighting element (2).

7. Lighting system according to one of the preceding claims, wherein each of the at least one portable device (4) provided with said specific program (10) is configured to detect an approaching/leaving of the user (3) associated to the said portable device (4), and optionally the motion direction of said user (3), by means of the data obtained by analysing the intensity of each radio signal received from a radio-transmitting device (8).

8. Lighting system according to one of the preceding claims, wherein said system comprises in combination with the lighting elements (2) at least one conditioning device and one or more sensors detecting environment conditions like temperature, humidity and natural lighting level, wherein the signal transmitted by at least one radio transmitting device (8) further contains additional information on the environment conditions ; said information being used as parameters to adjust said lighting elements (2) and the said conditioning devices.

9. Lighting system according to one of the preceding claims, wherein each lighting element (2) comprises a light source (5) comprising at least a LED diode.

10. Lighting system according to the preceding claim, wherein the light source (5) comprises LEDs of different colour, optionally activable in a differentiated way.

11. Lighting system according to claim 9 or 10, wherein the adjusting and control device (6) is a partialization system allowing the continuous adjustment of the light source (5).

12. Lighting system according to claim 1, wherein each radiofrequency transmitting device is an electronic module known as beacon, preferably working according to the Bluetooth® or Wi-Fi standard, and wherein each portable device (4) is a portable cell phone, such as a smartphone, or a wearable device provided with connection capabilities according to the Bluetooth® or Wi-Fi standard, with a specific program (10) for the interaction with said lighting system (1) and optionally with connection to a cell telephone network according to at least one International Telecommunication Union, ITU, standard suitable for the geographic area.

13. Lighting system according to claim 12, wherein the data transmitted by said portable device (4) towards said centralized device (9) further contains additional information on the user's (3) profile, on her/his preferences or on her/his desires set on the portable device (4), said information being used to realize a specific distinctive light signal on specific lighting elements.

14. Lighting system according to claim 1, wherein the switching on/off of the lighting element (2) occurs according to a pre-set scheme increasing and decreasing the lighting intensity between a minimum and a maximum, and wherein the switching on/off of neighbouring lighting elements (2) nearest to said user (3) occurs according a different pre-set scheme increasing and decreasing the lighting intensity, with different minimum and maximum values, which can be optionally be set differently according to the preferences of the single user (3).

15. Lighting system according to one of the preceding claims comprising " in combination with the lighting system:
- a plurality of screens for displaying messages or videos, each of the said screens being associated to a radiofrequency transmitting device (8) transmitting with a pre-set periodicity a radio signal containing at least a unique identifier, allowing to identify each screen; and;
- at least an adjusting and control device (6) for each screen provided with a communication system (7);
- wherein each of the at least one portable device (4) is further configured to receive the signals transmitted by the radio-transmitting devices (8) associated with the screens and radio-communicate to the centralized device (9),
- wherein the centralized device (9) is configured to respectively manage said screens in order to display videos or messages, wherein said videos or messages are determined by a profile of a user (3) in vicinity of a screen, which user is determined based on the unique identifier of the screen and the user identifier of the user (3) who is within a certain distance relatively to this screen;
- wherein a specific program (10) is loaded in and run by each portable device (4),
said program detecting the distance of the portable device relatively to the screen through the analysis of the intensity or power of the received radio signal.

16. Method of controlling a lighting system (1) according to claim 1, the method comprising the steps of:
- providing each of one or more users (3) with a portable device according to claim 1; and
- controlling the lighting elements (2) of the lighting system (1) by either the centralized device (9) of the lighting system (1), or the remote processing unit of the lighting system (1) communicating with the centralized device (9), based on the multiple user managing program.

## Patentansprüche

1. Beleuchtungssystem (1), das dazu konfiguriert ist, die Anwesenheit/Abwesenheit mindestens eines Benutzers zu detektieren und das Ein-/Ausschalten eines oder mehrerer Beleuchtungselemente einzustellen, um dabei die Lichtintensität eines jeweiligen des einen oder der mehreren Beleuchtungselemente zwischen einem Minimum und einem Maximum gemäß einem voreingestellten Schema zu erhöhen und zu verringern, wobei das Beleuchtungssystem umfasst
- eine Mehrzahl von Beleuchtungselementen (2), wobei jedes Beleuchtungselement eine in das Beleuchtungselement eingebettete Radiofrequenz-Sendeeinrichtung (8) aufweist, die dazu eingerichtet ist, ein zumindest eine eindeutige Kennung enthaltendes Funksignal mit einer vorgegebenen Periodizität zu senden, wodurch eine Identifikation des entsprechenden Beleuchtungselements ermöglicht wird, und eine Regel- und Steuereinrichtung, die mit einem Kommunikationssystem (7) versehen ist;
- mindestens eine tragbare Vorrichtung (4), wobei jede tragbare Vorrichtung dazu ausgelegt ist, von einem Benutzer (3) getragen zu werden und die von den in die Beleuchtungselemente eingebetteten Radiofrequenz-Sendevorrichtungen übertragenen Funksignale zu empfangen, wobei jede tragbare Vorrichtung ein spezifisches Programm aufweist, das in der tragbaren Vorrichtung geladen und von dieser ausgeführt wird, wobei das Programm dazu eingerichtet ist, die eindeutigen Kennungen der Beleuchtungselemente zu extrahieren und jeweils den Abstand der tragbaren Vorrichtung von zumindest einigen der Beleuchtungselemente durch Analyse der Intensität oder Leistung der Funksignale zu erfassen, die von den Radiofrequenz-Sendevorrichtungen von den besagten einigen der Beleuchtungselemente übertragen und von der tragbaren Vorrichtung empfangen werden, um zu bestimmen, ob sich der Benutzer, der die tragbare Vorrichtung trägt, sich bewegt und wenn ja, zu welcher Richtung hin, und zum Bestimmen des nächsten Beleuchtungselements und des benachbarten Beleuchtungselements zu dem nächsten Beleuchtungselement; und wobei jede tragbare Vorrichtung konfiguriert ist, um diese Information an eine zentrale Vorrichtung zu kommunizieren, die das Beleuchtungssystem zusammen mit mindestens den empfangenen eindeutigen Kennungen von den besagten einigen der Beleuchtungselemente und optional einer Benutzerkennung verwaltet;
- die zentrale Vorrichtung (9), wobei die zentrale Vorrichtung eine Steuereinrichtung umfasst, die dazu eingerichtet ist, Standardeinstellungen zu speichern und das Beleuchtungssystem durch Aktivierung der Beleuchtungselemente mittels Befehlen an die entsprechenden Regel- und Steuereinrichtungen über ihre Kommunikationssysteme zu verwalten, wobei die Aktivierung entweder durch Befehle erfolgt, die von der Steuervorrichtung gemäß von der mindestens einen tragbaren Vorrichtung empfangenen Daten erzeugt werden und jeweils gemäß einem Schema zum Ein- und Ausschalten des Beleuchtungselements, das einem Benutzer am nächsten ist, und möglicherweise von benachbarten Beleuchtungselementen davon, durch Erhöhen und Verringern der Lichtintensität der Beleuchtung, wobei das Schema durch den Benutzer durch Eingabe durch das spezifische Programm, das von der tragbaren Vorrichtung ausgeführt und in der tragbaren Vorrichtung oder in der zentralen Vorrichtung gespeichert ist, oder durch Befehle, die von der Steuervorrichtung standardgemäß erzeugt werden, voreingestellt wird;
**dadurch gekennzeichnet, dass**
- entweder die zentrale Vorrichtung oder eine mit der zentralen Vorrichtung kommunizierende Fernverarbeitungseinheit, die in dem Beleuchtungssystem enthalten ist, dazu konfiguriert ist, mehrere Benutzer des Beleuchtungssystems zu verwalten, indem sie ein Mehrbenutzerverwaltungsprogramm geladen hat und ausführt,
- wobei jeder Benutzer eine tragbare Vorrichtung trägt und ein individuelles Beleuchtungsschema und eine Intensitätseinstellung für die in der tragbaren Vorrichtung oder in der zentralen Vorrichtung gespeicherten Beleuchtungselemente aufweist;
- wobei das Mehrbenutzerverwaltungsprogramm eingerichtet ist, das Beleuchtungsschema und die Intensitätseinstellung jedes in dem unter der Kontrolle der zentralen Vorrichtung stehenden Bereich vorhandenen Benutzers zu erfassen, und basierend auf den Schemata und Intensitätseinstellungen und gemäß einer Trade-off-Funktion zwischen verschiedenen individuellen Präferenzen ein Beleuchtungsschema und eine Intensitätseinstellung zu berechnen, die auf die Beleuchtungselemente anzuwenden sind; und
- wobei die zentrale Vorrichtung dazu eingerichtet ist, die Beleuchtungselemente in Abhängigkeit von dem Ergebnis der Berechnung zu steuern.

2. Beleuchtungssystem nach Anspruch 1, wobei das Beleuchtungsschema und die Intensitätseinstellung als eine Mittelwertfunktion des erfassten Beleuchtungsschemas und der Intensitätseinstellung jedes Benutzers (3) berechnet werden, der mittels der zugehörigen tragbaren Vorrichtung (4) mit der zentralen Vorrichtung (9) kommuniziert.

3. Beleuchtungssystem nach Anspruch 1 oder 2, wobei ein Standardschema und eine Intensitätseinstellung für jedes Beleuchtungselement (2) von jedem Benutzer voreingestellt und in der zentralen Vorrichtung (9) gespeichert werden, und wobei jedes Schema und jede Intensität, die von jedem Benutzer (3) voreingestellt werden, gewichtet werden, und wobei das auf das Schema und die Intensität, die von jedem Benutzer (3) voreingestellt werden, anzuwendende Gewicht in Abhängigkeit von der Differenz zwischen dem/der standardmäßig eingestellten Schema und Intensität und dem/der von dem Benutzer (3) voreingestellten Schema und Intensität bestimmt wird.

4. Beleuchtungssystem nach Anspruch 1, wobei die zentrale Vorrichtung (9) dazu konfiguriert ist, ein Standardschema oder eine Intensitätseinstellung gemäß einem natürlichen Beleuchtungszustand zu bestimmen, der mittels eines oder mehrerer Sensoren gemessen wird, welche di gemessenen Daten an die zentrale Vorrichtung (9) übermitteln.

5. Beleuchtungssystem nach einem der vorhergehenden Ansprüche 1, 3 oder 4, wobei das Schema und die Intensitätseinstellung mittels eines nichtlinearen Klassifikators oder prädiktiven Algorithmus berechnet werden.

6. Beleuchtungssystem nach Anspruch 3, wobei das auf das Schema und die Intensitätsvoreinstellung eines Benutzers (3) anzuwendende Gewicht auch in Abhängigkeit von dem Abstand des Benutzers (3) oder der tragbaren Vorrichtung (4) dieser Person von dem Beleuchtungselement (2) berechnet wird.

7. Beleuchtungssystem nach einem der vorhergehenden Ansprüche, wobei jede der mindestens einen tragbaren Vorrichtung (4), die mit dem spezifischen Programm (10) versehen ist, dazu eingerichtet ist, ein Annähern/Entfernen des der tragbaren Vorrichtung (4) zugeordneten Benutzers (3) und optional die Bewegungsrichtung des Benutzers (3) mittels der Daten, die durch Analysieren der Intensität jedes von einer Funkübertragungsvorrichtung (8) empfangenen Funksignals erhalten werden, zu detektieren.

8. Beleuchtungssystem nach einem der vorhergehenden Ansprüche, wobei das System in Kombination mit den Beleuchtungselementen (2) mindestens eine Konditioniervorrichtung und einen oder mehreren Sensoren, die Umgebungsbedingungen wie Temperatur, Feuchtigkeit und natürlichen Beleuchtungsgrad detektieren, umfasst, wobei das von mindestens einer Funksendevorrichtung (8) übermittelte Signal weitere Informationen über die Umgebungsbedingungen enthält, wobei die Informationen als Parameter zur Einstellung der Beleuchtungselemente (2) und der Konditioniervorrichtungen dienen.

9. Beleuchtungssystem nach einem der vorhergehenden Ansprüche, wobei jedes Beleuchtungselement (2) eine Lichtquelle (5) mit zumindest einer LED-Diode umfasst.

10. Beleuchtungssystem nach dem vorhergehenden Anspruch, wobei die Lichtquelle LEDs unterschiedlicher Farbe umfasst, die optional auf differenzierter Weise aktivierbar sind.

11. Beleuchtungssystem nach Anspruch 9 oder 10, wobei die Regel- und Steuereinrichtung (6) ein Partialisierungssystem ist, das die kontinuierliche Einstellung der Lichtquelle (5) ermöglicht.

12. Beleuchtungssystem nach Anspruch 1, wobei jede Radiofrequenz-Sendevorrichtung ein elektronisches Modul ist, das als Funkbake bekannt ist und vorzugsweise nach dem Bluetooth®- oder Wi-Fi-Standard arbeitet, und wobei jede tragbare Vorrichtung (4) ein tragbares Mobiltelefon ist, wie ein Smartphone, oder ein tragbares Gerät mit Verbindungsfähigkeiten nach dem Bluetooth®- oder Wi-Fi-Standard, mit einem spezifischen Programm (10) zur Wechselwirkung mit dem Beleuchtungssystem (1) und optional mit Anschluss an ein Mobilfunknetz nach mindestens einem International Telecommunication Union Standard, ITU, der für den geographischen Bereich geeignet ist.

13. Beleuchtungssystem nach Anspruch 12, wobei die Daten, die von der tragbaren Vorrichtung (4) an die zentrale Vorrichtung (9) übertragen werden, ferner zusätzliche Informationen über das Profil des Benutzers (3), über ihre/seine Präferenzen oder über ihre/seine Wünsche, die auf der tragbaren Vorrichtung (4) eingestellt sind, enthalten, wobei die Informationen zur Realisierung eines spezifischen unterscheidbaren Lichtsignals an bestimmten Beleuchtungselementen verwendet werden.

14. Beleuchtungssystem nach Anspruch 1, wobei das Ein-/Ausschalten des Beleuchtungselements gemäß einem voreingestellten Schema erfolgt, das die Beleuchtungsintensität zwischen einem Minimum und einem Maximum erhöht und verringert, und wobei das Ein-/Ausschalten benachbarter Beleuchtungselemente (2), die dem Benutzer (3) am nächsten liegen, gemäß einem anderen voreingestellten Schema erfolgt, das die Beleuchtungsintensität mit unterschiedlichen Minimal- und Maximalwerten, die optional in Abhängigkeit von den Präferenzen des einzelnen Benutzers (3) unterschiedlich eingestellt werden können, erhöht und verringert.

15. Beleuchtungssystem nach einem der vorhergehenden Ansprüche, umfassend in Kombination mit dem Beleuchtungssystem:
- eine Vielzahl von Bildschirmen zum Anzeigen von Nachrichten oder Videos, wobei jeder der Bildschirme einer Radiofrequenz-Sendevorrichtung (8) zugeordnet ist, die mit einer voreingestellten Periodizität ein Funksignal sendet, das mindestens eine eindeutige Kennung enthält, wodurch jeder Bildschirm identifiziert werden kann, und
- zumindest eine Regel- und Steuereinrichtung (6) für jeden mit einem Kommunikationssystem (7) versehenen Bildschirm,
- wobei jede der zumindest einen tragbaren Vorrichtung (4) ferner dazu eingerichtet ist, die von den Bildschirmen zugeordneten Funksendeeinrichtungen (8) übermittelten Signale zu empfangen und mit der zentralen Einrichtung (9) funktechnisch zu kommunizieren,
- wobei die zentrale Vorrichtung (9) dazu eingerichtet ist, die Bildschirme jeweils zu verwalten, um Videos oder Nachrichten anzuzeigen, wobei die Videos oder Nachrichten durch ein Profil eines Benutzers (3) in der Nähe eines Bildschirms bestimmt werden, wobei der Benutzer aufgrund der eindeutigen Kennung des Bildschirms und der Benutzerkennung des sich in einem bestimmten Abstand relativ zu diesem Bildschirm befindenden Benutzers (3) bestimmt wird;
- wobei von jeder tragbaren Vorrichtung (4) ein bestimmtes Programm (10) geladen und ausgeführt wird, welches den Abstand der tragbaren Vorrichtung relativ zum Bildschirm durch Analyse der Intensität oder Leistung des empfangenen Funksignals erfasst.

16. Verfahren zur Steuerung eines Beleuchtungssystems (1) nach Anspruch 1, wobei das Verfahren die Schritte umfasst:
- Bereitstellen einer tragbaren Vorrichtung nach Anspruch 1 für jeweils einen oder mehr Benutzer (3) und
- Steuern der Beleuchtungselemente (2) des Beleuchtungssystems (1) entweder durch die zentrale Vorrichtung (9) des Beleuchtungssystems (1) oder durch die mit der zentralen Vorrichtung (9) kommunizierende Fernverarbeitungseinheit des Beleuchtungssystems (1) auf der Grundlage des Mehrbenutzerverwaltungsprogramms.

## Revendications

1. Un système d'éclairage (1) configuré pour détecter la présence/l'absence d'au moins un utilisateur et pour régler l'allumage/la mise hors-circuit d'un ou plusieurs éléments d'éclairage consistant à augmenter et diminuer l'intensité lumineuse de l'un respectif desdits un ou plusieurs éléments d'éclairage entre un minimum et un maximum selon un schéma préétabli, le système d'éclairage comprenant - une pluralité d'éléments d'éclairage (2), dans laquelle chaque élément d'éclairage comprend un dispositif de transmission à radiofréquence (8) intégré dans l'élément d'éclairage et configuré pour transmettre avec une périodicité prédéfinie un signal radio contenant au moins un identifiant unique, permettant ainsi l'identification de l'élément d'éclairage correspondant, et un dispositif de réglage et de commande pourvu d'un système de communication (7);
- au moins un dispositif portable (4), dans lequel chaque dispositif portable est configuré pour être transporté par un utilisateur (3) et pour recevoir les signaux radio transmis par les dispositifs de transmission à radiofréquence intégrés dans les éléments d'éclairage, dans lequel chaque dispositif portable a un programme spécifique chargé et exécuté par le dispositif portable, ledit programme étant adapté pour extraire les identifiants uniques des éléments d'éclairage et pour détecter respectivement la distance du dispositif portable d'au moins certains des éléments d'éclairage à travers l'analyse de l'intensité ou de la puissance des signaux radio transmis par les dispositifs de transmission à radiofréquence desdits certains des éléments d'éclairage et reçus par le dispositif portable afin de déterminer si l'utilisateur portant ledit dispositif portable se déplace et, le cas échéant, dans quelle direction, et pour déterminer l'élément d'éclairage le plus proche et l'élément d'éclairage voisin dudit élément d'éclairage le plus proche; et dans lequel chaque dispositif portable est configuré pour communiquer via radio ces informations à un dispositif centralisé gérant ledit système d'éclairage avec au moins les identifiants uniques reçus desdits certains des éléments d'éclairage et éventuellement avec un identifiant d'utilisateur;
- le dispositif centralisé (9), dans lequel le dispositif centralisé comprend un dispositif de commande configuré pour mémoriser les réglages standards et pour gérer le système d'éclairage en activant les éléments d'éclairage au moyen de commandes aux dispositifs de réglage et de commande correspondants via leur systèmes de communication, dans lequel ladite activation se produit soit par des commandes générées par le dispositif de commande en fonction des données reçues du au moins un dispositif portable et respectivement en fonction d'un schéma de allumage et ensuite de mise hors-circuit de l'élément d'éclairage le plus proche d'un utilisateur, et, éventuellement, de ses éléments d'éclairage voisins, en augmentant et en diminuant l'intensité lumineuse de l'éclairage, dans lequel le schéma est préétabli par ledit utilisateur par entrée à travers ledit programme spécifique exécuté par le dispositif portable et mémorisé dans le dispositif portable ou dans le dispositif centralisé, ou par des commandes générées par le dispositif de commande selon le standard;
**caractérisé en ce que**:
- soit le dispositif centralisé, soit une unité de traitement à distance communiquant avec le dispositif centralisé et comprise dans le système d'éclairage, est configuré(e) pour gérer plusieurs utilisateurs du système d'éclairage en ayant chargé et en exécutant un programme de gestion de plusieurs utilisateurs, - dans lequel chaque utilisateur transportant un dispositif portable a un schéma d'éclairage individuel et dispose d'un réglage d'intensité pour les éléments d'éclairage mémorisés dans le dispositif portable ou dans le dispositif centralisé;
- dans lequel ledit programme de gestion de plusieurs utilisateurs est adapté pour acquérir le schéma d'éclairage et le réglage d'intensité de chaque utilisateur présent dans la zone sous contrôle du dispositif centralisé et pour calculer, en fonction desdits schémas et réglages d'intensité et en fonction d'une fonction de compromis entre différentes préférences individuelles, un schéma d'éclairage et un réglage d'intensité à appliquer aux éléments d'éclairage; et
- dans lequel le dispositif centralisé est configuré pour commander les éléments d'éclairage en fonction du résultat du calcul.

2. Système d'éclairage selon la revendication 1, dans lequel le schéma d'éclairage et le réglage d'intensité sont calculés comme une fonction moyenne du schéma d'éclairage et du réglage d'intensité acquise de chaque utilisateur (3) communiquant au moyen d'un dispositif portable (4) associé avec le dispositif centralisé (9).

3. Système d'éclairage selon la revendication 1 ou 2, dans lequel un schéma standard et un réglage d'intensité sont préétablis pour chaque élément d'éclairage (2) par chaque utilisateur et sont mémorisés dans le dispositif centralisé (9) et dans lequel chaque schéma et intensité préétablis par chaque utilisateur (3) sont pondérés, le poids à appliquer au schéma et à l'intensité préétablis par un utilisateur (3) étant déterminé en fonction de la différence entre le schéma standard et le réglage d'intensité et le schéma et l'intensité préétablis par ledit utilisateur (3).

4. Système d'éclairage selon la revendication 1, dans lequel le dispositif centralisé (9) est configuré pour déterminer un schéma standard ou un réglage d'intensité réglée en fonction d'une condition d'éclairage naturel mesurée au moyen d'un ou de plusieurs capteurs communiquant les données mesurées au dispositif centralisé (9).

5. Système d'éclairage selon l'une des revendications précédentes 1, 3 ou 4, dans lequel le schéma et le réglage d'intensité sont calculés au moyen d'un classificateur non linéaire ou d'un algorithme prédictif.

6. Système d'éclairage selon la revendication 3, dans lequel le poids à appliquer au schéma et à l'intensité préétablis d'un utilisateur (3) est aussi calculé comme une fonction de la distance de l'utilisateur (3) ou du dispositif portable (4) de cette personne de l'élément d'éclairage (2).

7. Système d'éclairage selon l'une des revendications précédentes, dans lequel chacun des au moins un dispositif portable (4) fourni avec ledit programme spécifique (10) est configuré pour détecter une approche/sortie de l'utilisateur (3) associé audit dispositif portable (4) et, éventuellement, la direction de mouvement dudit utilisateur (3), au moyen des données obtenues en analysant l'intensité de chaque signal radio reçu d'un dispositif de transmission radio (8).

8. Système d'éclairage selon l'une des revendications précédentes,
dans lequel ledit système comprend en combinaison avec les éléments d'éclairage (2) au moins un dispositif de conditionnement et un ou plusieurs capteurs détectant des conditions d'environnement telles que la température, l'humidité et le niveau d'éclairage naturel, dans lequel le signal transmit par au moins un dispositif de transmission radio (8) contient en outre des informations additionnelles sur les conditions d'environnement;
lesdites informations étant utilisées comme des paramètres pour régler lesdits éléments d'éclairage (2) et lesdits dispositifs de conditionnement.

9. Système d'éclairage selon l'une des revendications précédentes, dans lequel chaque élément d'éclairage (2) comprend une source lumineuse (5) comprenant au moins une diode LED.

10. Système d'éclairage selon la revendication précédente, dans lequel la source lumineuse (5) comprend des LED de couleur différente, pouvant éventuellement être activés de manière différenciée.

11. Système d'éclairage selon la revendication 9 ou 10, dans lequel le dispositif de réglage et de commande (6) est un système de partialisation permettant le réglage continu de la source lumineuse (5).

12. Système d'éclairage selon la revendication 1, dans lequel chaque dispositif de transmission à radiofréquence est un module électronique appelé balise, fonctionnant de préférence selon le standard Bluetooth® ou Wi-Fi, et dans lequel chaque dispositif portable (4) est un téléphone portable, tel qu'un smartphone, ou un dispositif portable doté de capacités de connexion selon le standard Bluetooth® ou Wi-Fi, avec un programme spécifique (10) pour interagir avec ledit système d'éclairage (1) et, éventuellement, avec connexion à un réseau de téléphonie cellulaire selon au moins une norme de l'Union Internationale des Télécommunications, UIT, appropriée à la zone géographique.

13. Système d'éclairage selon la revendication 12, dans lequel les données transmises par ledit dispositif portable (4) vers ledit dispositif centralisé (9) contiennent en outre des informations additionnelles sur le profil de l'utilisateur (3), sur ses préférences ou sur ses désirs définis sur le dispositif portable (4), lesdites informations étant utilisées pour générer un signal lumineux distinctif spécifique sur des éléments d'éclairage spécifiques.

14. Système d'éclairage selon la revendication 1, dans lequel l'allumage/la mise hors-circuit de l'élément d'éclairage (2) se produit en fonction d'un schéma préétabli en augmentant et en diminuant l'intensité lumineuse entre un minimum et un maximum, et dans lequel l'allumage/la mise hors-circuit d'éléments d'éclairage voisins (2) les plus proches de l'utilisateur (3) se produit en fonction de différents schéma préétablis en augmentant et en diminuant l'intensité lumineuse, avec des valeurs minimales et maximales différentes, qui peuvent éventuellement être réglées différemment en fonction des préférences de l'utilisateur unique (3).

15. Système d'éclairage selon l'une des revendications précédentes comprenant en combinaison avec le système d'éclairage: - une pluralité d'écrans pour l'affichage de messages ou de vidéos, chacun desdits écrans étant associé à un dispositif de transmission à radiofréquence (8) transmettant avec une périodicité prédéfinie un signal radio contenant au moins un identifiant unique, permettant ainsi d'identifier chaque écran; et;
- au moins un dispositif de réglage et de commande (6) pour chaque écran pourvu d'un système de communication (7);
- dans lequel chacun des au moins un dispositif portable (4) est en outre configuré pour recevoir les signaux transmis par les dispositifs de transmission radio (8) associés avec les écrans, et
pour communiquer via radio avec le dispositif centralisé (9),
- dans lequel le dispositif centralisé (9) est configuré pour gérer respectivement lesdits écrans afin d'afficher des vidéos ou des messages, dans lequel lesdites vidéos ou lesdits messages sont déterminés par un profil d'un utilisateur (3) à proximité d'un écran, lequel utilisateur est déterminé en fonction d'un identifiant unique de l'écran et de l'identifiant utilisateur de l'utilisateur (3) qui se trouve à une certaine distance par rapport à son écran;
dans lequel un programme spécifique (10) est chargé et exécuté par chaque dispositif portable (4),
ledit programme détectant la distance du dispositif portable par rapport à l'écran à travers l'analyse de l'intensité ou de la puissance du signal radio reçu.

16. Méthode de contrôle d'un système d'éclairage (1) selon la revendication 1, la méthode comprenant les étapes de:
- fournir à chaque unique ou multiples utilisateurs (3) un dispositif portable selon la revendication 1; et
- contrôler les éléments d'éclairage (2) du système d'éclairage (1) soit par le dispositif centralisé (9) du système d'éclairage (1), soit par l'unité de traitement à distance du système d'éclairage (1) communiquant avec le dispositif centralisé (9), en fonction du programme de gestion de plusieurs utilisateurs.
